# NEUE EUROPÄISCHE PATENTSCHRIFT

(11) **EP 1 200 692 B2**
(45) Veröffentlichungstag und Bekanntmachung des Hinweises auf die Entscheidung über den Einspruch: **11.11.2009**
(45) Hinweis auf die Patenterteilung: 31.03.2004
(21) Anmeldenummer: 99957285.2
(22) Anmeldetag: 06.11.1999
(51) Int. Cl.: E04F 15/20, B32B 21/00

(54) **LAMINATFUSSBODEN MIT TRITTSCHALLDÄMPFUNG**
LAMINATE FLOORING COMPRISING TREAD SOUND-PROOFING
REVETEMENT DE SOL LAMINE DOTE D'UNE ISOLATION SONORE CONTRE LES BRUITS DE PAS

(30) Priorität: 31.07.1999 DE 19936127
(43) Veröffentlichungstag der Anmeldung: 02.05.2002
(60) Teilanmeldung: 02006856.5
(73) Patentinhaber: Kronoplus Technical AG, 9052 Niederteufen (CH)
(72) Erfinder: DÖHRING, Dieter, D-01561 Lampertswalde (DE); DEVANTIER, Bernd, D-01462 Mobschatz (DE); EMMLER, Rico, D-01307 Dresden (DE)
(74) Vertreter: Heselberger, Johannes
(86) Internationale Anmeldenummer: PCT/EP1999/008510
(87) Internationale Veröffentlichungsnummer: WO 2001/009461

(56) Entgegenhaltungen:
- WO-A-93/24295
- GB-A- 2 024 907
- JP-A- 02 030 848

## Beschreibung

Die Erfindung betrifft einen Fußbodenbelag gemäß dem Oberbegriff des ersten Patentanspruchs, wie er in Häusern und Wohnungen vielfach verwendet wird, sowie ein Herstellungsverfahren für diesen Fußbodenbelag.

Ein starrer Fußbodenbelag kann aus Holz, Holzwerkstoffen und/oder aus Kunststoff bestehen. Bekannt sind u. a. Laminatfußböden, die aus einzelnen Paneelen zusammengesetzt sind und schwimmend verlegt werden. Ein einzelnes Paneel besteht beispielsweise aus einer HDF-Trägerplatte sowie einer hierauf aufgebrachten Laminatschicht, die u. a. für das Aussehen des Fußbodens verantwortlich ist.

Bewegen sich Personen in einem Raum, der mit starren Fußbodenpaneelen ausgestattet ist, so ist die Geräuschentwicklung deutlich größer als bei Räumen, die mit Teppichen oder elastischen Bodenbelägen wie PVC ausgelegt sind. Die Geräuschentwicklung beruht auf Reflektionen von Stoßwellen, die beim Begehen in den Boden eingeleitet werden. Das Amplitudenspektrum der Stoß- bzw. Schallwellen hängt von den Grenzen Raum - Boden, Boden - Untergrund sowie von der Dämpfung in den verschiedenen Schichten ab. Die Geräuschentwicklung ist dann besonders groß, wenn zwischen zwei Schichten, also z. B. zwischen dem Laminatfußboden und dem darunter befindlichen Estrich eine Luftschicht verbleibt.

Aus der WO 93/24295 ist ein Holzbelag der eingangs genannten Gattung für einen Fußboden bekannt, der an der Unterseite u. a. zwecks Schalldämmung eine Schicht aus thermoplastischem Material aufweist, bei der Stücke aus Kunststoffmaterial miteinander verbunden worden sind.

Auf diese Weise entstehen Lufteinschlüsse innerhalb der Schicht aus thermoplastischem Material sowie an der Grenzfläche zwischen der thermoplastischen Schicht und dem eigentlichen Holzbelag. Wie bereits im vorangegangenen Absatz erläutert, wirkt sich die verbleibende Luft zwischen den Schichten nachteilhaft auf die Geräuschentwicklung aus.

Um die Geräuschentwicklung beim Begehen herabzusetzen, werden verschiedene mattenförmige Materialien wie Noppaschaum, Kork, polymergebundene Matten aus Altgummi und Kork, Wellpappe oder weiche Holzfaservliese als

Unterlage unter einem starren Bodenbelag oberhalb des Estrichs eingesetzt. Die hierdurch erzielbare schalldämpfende Wirkung ist jedoch unbefriedigend. Daher wurde bereits versucht, die genannten mattenförmigen Materialien direkt auf der Bodenrückseite eines starren Fußbodenbelages, also z. B. auf den Boden einer Fußbodenpaneele zu kleben. Nachteilhaft muß hierfür ein hoher technischer Aufwand betrieben werden. Folglich sind die Kosten hoch. Insgesamt ist die erreichte Schallreduzierung im Verhältnis zum technischen Aufwand unbefriedigend.

So ist aus der Druckschrift DE 196 20 987 C1 eine Dämmfolie bekannt, die mit einem Klebestreifen ausgerüstet ist. Es ist vorgesehen, die Dämmfolie auf der Unterseite eines starren Fußbodenbelages aufzukleben, um so eine Geräuschentwicklung beim Begehen des Fußbodens herabzusetzen.

Aus der Druckschricht DE 43 29 766 A1 ist bekannt, einen polymeren Werkstoff zur Trittschalldämmung eines Bodens vorzusehen.

Gemäß der Druckschrift DE 38 35 638 A1 wird ein Dämmaterial aus expandierfähigem Polystyrol als Dämmschicht bei starren Fußbodenbelägen eingesetzt.

Gegenüber dem vorgenannten Stand der Technik ist es Aufgabe der Erfindung, einen Fußbodenbelag der eingangs genannten Gattung zu schaffen, der über gute schalldämpfende Eigenschaften verfügt, ohne hierfür einen unangemessen hohen technischen Aufwand betreiben zu müssen. Aufgabe der Erfindung ist ferner die Schaffung eines Verfahrens, mit dem der erfindungsgemäße Fußbodenbelag auf einfache Weise hergestellt werden kann.

Die Aufgabe der Erfindung wird durch einen Fußbodenbelag mit den Merkmalen des Patentanspruchs 1 gelöst. Ein Verfahren zur Herstellung des Fußbodenbelages weist die Merkmale des Patentanspruchs 3 auf. Vorteilhafte Ausgestaltungen ergeben sich aus den nachgeordneten Ansprüchen.

Die Paneele des Fußbodenbelags nach Patentanspruch *1* weisen auf ihren Unterseite eine Schicht aus thermoplastischem Material auf. Die Schicht ist herstellungsbedingt fest mit dem Fußbodenbelag verbunden. Lufteinschlüsse zwischen der Schicht aus thermoplastischem Material und dem Belag werden herstellungsbedingt vermieden. Die starren Laminat- oder Parkettpaneele des Belags bestehen aus Holz oder Holzwerkstoffen.

Thermoplastisches Material ist ein solches, welches sich bei Überschreiten einer materialabhängigen Temperatur erweicht und fließfähig wird. In diesem Zustand ist das Material verformbar und kann auf die Unterseite des Fußbodenbelages durch Streichen oder Aufwalzen aufgebracht und so im Sinne der Erfindung fest mit dem Fußbodenbelag verbunden werden.

Wird die vorgenannte Temperatur unterschritten, so verfestigt sich das Material, und es treten die plastisch/elastischen Eigenschaften in Erscheinung.

Die vorgenannten Eigenschaften des thermoplastischen Materials ermöglichen es, dieses bei erhöhten Temperaturen mit der Unterseite des starren Fußbodenbelages durch Aufstreichen oder Aufwalzen fest zu verbinden. Durch die feste Verbindung werden die Schallwellen direkt in die schalldämpfende Schicht ohne Reflexion an der Grenzschicht übertragen. Damit entfällt eine wesentliche Ursache für eine fehlende Schalldämpfung, die bei Fußböden gemäß eingangs genanntem Stand der Technik problematisch ist. Es resultiert eine wesentlich verbesserte Schalldämpfung.

Da das Material lediglich erwärmt und aufgestrichen oder aufgewalzt werden muß, ist die Herstellung einfach. Ein hoher technischer Aufwand muß somit nicht betrieben werden.

Als zweckmäßig hat sich eine Stärke von wenigstens 0,1 mm der schalldämpfenden Schicht ergeben. Bei einer Stärke von 5 mm der schalldämpfenden Schicht aus thermoplastischem Material steht der erforderliche Materialaufwand in einem wirtschaftlichen Verhältnis zum erzielbaren Effekt. In Versuchen hat sich eine Stärke von 0,7 mm als vorteilhaft herausgestellt.

Selbstverständlich ist die geeignetste Schichtdicke materialabhängig. Im jeweiligen Einzelfall variiert diese also.

Gemäß der Erfindung wird das thermoplastische Material so gewählt, daß es adhäsive Eigenschaften aufweist. Adhäsion ist ein polymertypischer Fachbegriff. Ein Beispiel für ein Material, welches im Sinne der Erfindung adhäsive Eigenschaften aufweist, sind thermoplastische Kautschuke.

Da das Material so gewählt ist, daß es adhäsive Eigenschaften aufweist, haftet es auf dem Fußbodenuntergrund. Die Haftung wird vorzugsweise so ausgebildet, daß der Fußbodenbelag ohne aufwendige technische Hilfsmittel wieder beseitigt werden kann. Eine Zwischenschicht (Luftschicht) zwischen dem Fußbodenuntergrund und der thermoplastischen Schicht wird so minimiert. Schall wird daher in weiter verbesserter Weise gedämpft.

Der anspruchsgemäße Fußbodenbelag wird hergestellt, indem thermoplastisches Material so erwärmt wird, daß es fließfähig wird. Das erwärmte Material wird auf die Unterseite von Elementen des Fußbodenbelages oder auf eine Trägerplatte für einen solchen Fußbodenbelag aufgestrichen oder aufgewalzt. Anschließend werden die Fußbodenelemente bzw. die Trägerplatte mit dem aufgebrachten thermoplastischen Material abgekühlt.

Die Erfindung wird anhand des nachfolgenden Ausführungsbeispiels näher erläutert. Als starrer Fußbodenbelag ist eine Fußbodenpaneele im Format 1285 x 185 x 8 mm vorgesehen. Diese besteht aus einer 0,8 mm starken Hochdrucklaminatschicht, einer 6,4 mm dicken HDF-Trägerplatte mit einer Dichte von 870 kg/m³ sowie einer 0,8 mm starken Hochdrucklaminatgegenzugschicht. Auf die Fußbodenpaneele wird mittels eines Streichaggregates auf der Paneelenrückseite eine thermoplastische Schicht aus einem Copolymer mit einer Temperatur von 150°C aufgetragen. Das Copolymer besteht aus Vinylacetat mit einem Acrylsäureesteranteil von 12 Masse-%. Die Stärke der aufgetragenen Schicht beträgt 0,7 mm.

In einem akustischen Versuchsraum wurde der Schallpegel beim Begehen einer verlegten Fläche von 20 m² des erfindungsgemäß hergestellten Bodens im Vergleich zu einer unbehandelten Fläche gemessen. Dem unbehandelten Boden wurde eine Noppaschaummatte aus Polyethylen in einer Stärke von 3 mm unterlegt. Der beschichtete Boden wurde ohne zusätzliche Dämmaterialien verlegt. Im Ergebnis der Schallmessungen war für den unbehandelten Boden im Meßraum ein Schallpegel von 78 dB und für den erfindungsgemäß mit Schalldämpfung ausgerüsteten Boden ein Schallpegel von 67 dB bei gleicher mechanischer Anregung festzustellen. Da gleichzeitig eine Frequenzverschiebung von höheren zu tieferen Tönen stattfand, wurde der behandelte Boden als wesentlich leiser empfunden.

## Patentansprüche

1. Fußbodenbelag mit aus Holz oder Holzwerkstoffen bestehenden starren Laminat- oder Parkettpaneelen und einer Schicht, die mit der Unterseite der Paneele fest verbunden ist und aus thermoplastischem Material besteht **dadurch gekennzeichnet, dass** die thermoplastische Schicht durch Aufstreichen oder Aufwalzen des im fließfähigen Zustand befindlichen thermoplastischen Materials auf die Unterseite der Fußbodenpaneele hergestellt worden ist, und bei dem ein thermoplastisches Material mit adhäsiven Elgenschaften eingesetzt ist, so dass das thermoplastische Material des Fußbodenbelags auf dem Fußbodenuntergrund haftet und eine Zwischenschicht (Luftschicht) zwischen dem Fußbodenuntergrund und der thermoplastischen Schicht minimiert wird.

2. Fußbodenbelag nach Anspruch 1, bei dem die aus thermoplastischem Material bestehende Schicht 0,1 bis 0,7 mm dick ist.

3. Verfahren zur Herstellung eines Fußbodenbelages nach einem der vorhergehenden Ansprüche, bei dem das thermoplastische Material erwärmt und im fließfähigen Zustand auf die Unterseite der Laminat- oder Parkettpaneele aufgestrichen oder aufgewalzt wird.

## Claims

1. Floor covering with rigid laminate or parquet panels consisting of wood or wooden materials and a layer, which is firmly connected to the underside of the panels and consists of a thermoplastic material **characterized in that** the thermoplastic layer is manufactured by painting or rolling the thermoplastic material in a pourable condition onto the underside of the floor panels, and in which a thermoplastic material with adhesive properties is used, such that the thermoplastic material of the floor covering adheres onto the floor base and an intermediate layer (air layer) between the floor base and the thermoplastic layer is minimized.

2. Floor covering according to claim 1, wherein the layer consisting of thermoplastic material is 0.1 to 0.7 mm thick.

3. Method for manufacturing a floor covering according to any one of the preceding claims, wherein the thermoplastic material is heated and painted or rolled in a pourable condition onto the underside of the laminate or parquet panels.

## Revendications

1. Revêtement de sol, comportant des panneaux de stratifié ou de parquet rigides, constitués de bois ou de matériaux à base de bois, et comportant une couche qui est fermement fixée à la face inférieure des panneaux et est constituée d'un matériau thermoplastique, **caractérisé en ce que** la couche thermoplastique a été réalisée par application à la brosse ou au rouleau, sur la face inférieure des panneaux de plancher, du matériau thermoplastique se trouvant dans un état fluide, et dans lequel on utilise un matériau thermoplastique présentant des propriétés adhésives, de telle sorte que le matériau adhésif du revêtement de sol adhère au support du plancher, avec minimisation d'une couche intermédiaire (couche d'air) entre le support de plancher et la couche thermoplastique.

2. Revêtement de sol selon la revendication 1, dans lequel la couche constituée du matériau thermoplastique a une épaisseur de 0,1 à 0,7 mm.

3. Procédé de fabrication d'un revêtement de sol selon l'une des revendications précédentes, dans lequel on chauffe le matériau thermoplastique et on l'applique à la brosse ou au rouleau, dans un état fluide, sur la face inférieure des panneaux de stratifié ou de parquet.
